# EUROPEAN PATENT APPLICATION

(11) **EP 4 545 200 A1**
(43) Date of publication of application: **30.04.2025**
(21) Application number: 23857149.1
(22) Date of filing: 03.08.2023
(51) Int. Cl.: B21D 22/00, G06F 30/23, G06F 111/10, G06F 113/22

(54) **PRESS FORMING ANALYSIS METHOD, PRESS FORMING FRACTURE DETERMINING METHOD FOR PRESS-FORMED ARTICLE, PRESS-FORMED ARTICLE MANUFACTURING METHOD, PRESS FORMING ANALYSIS DEVICE, AND PRESS FORMING ANALYSIS PROGRAM**

(30) Priority: 24.08.2022 JP 2022132935; 09.06.2023 JP 2023095254
(71) Applicant: JFE Steel Corporation, Tokyo 100-0011 (JP)
(72) Inventor: KISHIGAMI, Yasuhiro, Tokyo 100-0011 (JP); SATO, Kentaro, Tokyo 100-0011 (JP); OGIHARA, Yuki, Tokyo 100-0011 (JP)
(74) Representative: Grünecker Patent- und Rechtsanwälte PartG mbB
(86) International application number: PCT/JP2023/028451
(87) International publication number: WO 2024/043035

(57) **Abstract**

A press forming analysis method according to the present invention includes a blank model creating step (S1) of creating a blank model and a press forming analysis step (S2) of performing a press forming analysis using the created blank model. The blank model creating step (S1) includes a blank mesh creating step (S1-1) of creating a finite element mesh constituting the blank model, a grouping step (S1-2) of grouping finite elements constituting the finite element mesh into a plurality of groups, and a deformation condition setting step (S1-3) of differently setting conditions relating to deformation for the finite elements of the grouped groups.

## Description

### Field

The present invention relates to a press forming analysis method by a finite element method, a press forming fracture determining method for a press formed part using the press forming analysis method, a press formed part manufacturing method using the press forming fracture determining method, a press forming analysis device, and a press forming analysis program.

### Background

Application of a high-tensile steel sheet in an automobile body is expanding from an increasing need for improvement of fuel efficiency and improvement of collision safety due to a weight reduction of an automobile.
However, since the high-tensile steel sheet has low ductility, low formability such as occurrence of fracture is a problem of the application. For example, when fracture occurs because of molding even if high-tensile steel is applied, it is sometimes necessary to change the shape of a component, which is a hindrance to the application of the high-tensile steel sheet. In this regard, if fracture can be predicted in advance by a press forming analysis, it is possible to cope with the fracture. A prediction technique with high accuracy by the forming analysis is required.

However, a steel sheet is composed of various metal structures, the size and direction of crystal grains are not uniform, and deformation in the steel sheet has a non-uniform distribution. Therefore, fracture cannot be predicted in some cases. As an analysis of inhomogeneous deformation in a material, Non-Patent Literature 1 describes a case in which generation of void defect in a steel sheet containing ferrite and martensite is predicted using a crystal plasticity finite element analysis. In addition, Non-Patent Literature 2 describes a case in which a tensile test of aluminum is examined by a crystal plasticity finite element analysis considering a crystal direction.

### Citation List

### Non Patent Literature

Non Patent Literature 1: Shigeru Komura, "Finite Element Analysis of Deformation and Destruction in Mesoscale", Nippon Steel & Sumikin Technical Journal, 2018, No. 410, p. 47-56
Non Patent Literature 2: Kengo Yoshida, "Molding Simulation of a Thin metal sheet Using the Crystal Plasticity Theory, Plasticity and Machining", The Japan Society for Plasticity Processing, March 2016, Vol. 57, No. 662, p. 38-42

### Summary

### Technical Problem

However, in the crystal plasticity finite element analysis applied in Non Patent Literatures 1 and 2, elements to be used are very small and a calculation time is enormous. Therefore, the application is limited to a press forming analysis such as a tensile test.

The present invention has been made in order to solve the problems described above, and an object of the present invention is to provide a press forming analysis method that can consider nonuniformity of deformation in a metal material with a finite element method and accurately predict fracture of a press formed part in press forming using a metal sheet. Another object of the present invention is to provide a press forming fracture determining method and a press formed part manufacturing method using the press forming fracture determining method that can accurately determine facture of a press formed part. Further, another object of the present invention is to provide a press forming analysis device and a press forming analysis program that can accurately perform a press forming analysis with a finite element method. Solution to Problem

A press forming analysis method according to a first aspect of the present invention uses a finite element method in which a computer executes steps, and includes: a blank model creating step of creating a blank model; and a press forming analysis step of performing a press forming analysis using the created blank model, wherein the blank model creating step includes: a blank mesh creating step of creating a finite element mesh constituting a blank model; a grouping step of grouping finite elements constituting the finite element mesh into a plurality of groups; and a deformation condition setting step of differently setting a condition relating to deformation for each of the groups in the finite elements of the grouped groups.

In the deformation condition setting step, a mechanical property or a sheet thickness may be differently set for each of the groups.

In the deformation condition setting step, an element size may be differently set for each of the groups.

In the deformation condition setting step, an element type may be differently set for each of the groups.

When the mechanical property is differently set, a range of the mechanical property to be set may be set within a range of dispersion of a mechanical property of each of metal structures of a metal material applied as a blank.

When the mechanical property is differently set, a range of the mechanical property to be set may be set within a range of dispersion in a mechanical property of a metal material applied as a blank.

The press forming analysis method may further include a blank characteristic variation range measuring step of measuring a variation range of the mechanical property of the metal sheet applied as the blank, and in the blank characteristic variation range measuring step, a hardness distribution of the metal sheet applied as the blank may be measured and a range of dispersion of the mechanical property may be determined based on the hardness distribution.

The blank characteristic variation range measuring step may further include: measuring surface roughness of front and rear surfaces of the metal sheet applied as the blank; determining a range of a sheet thickness based on the surface roughness of the metal sheet; and setting a sheet thickness of a finite element mesh constituting the blank model at random in the range of the sheet thickness.

When the sheet thickness is differently set, a range of the sheet thickness may be set within 0±20% of a sheet thickness of a metal material applied as a blank to set the sheet thickness.

The press forming analysis method may further includes a blank characteristic variation range measuring step of measuring a range of the sheet thickness of the metal sheet applied as the blank, and in the blank characteristic variation range measuring step, surface roughness of front and rear surfaces of the metal sheet applied as the blank may be measured, and the range of the sheet thickness may be determined based on the surface roughness of the metal sheet.

A press forming analysis method according to a second aspect of the present invention uses a finite element method in which a computer executes steps and includes: a blank model creating step of creating a blank model; and a press forming analysis step of performing a press forming analysis using the created blank model, wherein the blank model creating step includes: a region setting step of setting a plurality of regions on an inner side of a contour line representing a shape of a blank; and a mesh creating step of creating a finite element mesh different in an element size, which is a condition relating to deformation, for each of the set plurality of regions.

A range of an element size to be set may be a half or more of a sheet thickness of a metal sheet applied as a blank.

A press forming fracture determining method for a press formed part according to the present invention includes: a press forming fracture determining step of performing a press forming analysis for a press formed part using the press forming analysis method according to the present invention; and further determining presence or absence of occurrence of fracture in press forming of the press formed part based on a forming limit diagram (FLD) of a metal sheet used for the press formed part.

A press formed part manufacturing method for suppressing press forming fracture according to the present invention includes: a press forming fracture determining step; a press condition adjusting step; and a press formed part manufacturing step, wherein in the press forming fracture determining step, presence or absence of occurrence of fracture in press forming of a press formed part is determined by the press forming fracture determining method for a press formed part according to the present invention, in the press condition adjusting step, when it is determined in the press forming fracture determining step that fracture occurred, press forming conditions including a blank shape and a press forming die shape in a press forming analysis are changed until it is determined that no fracture occurred in all parts of the press formed part, and in the press formed part manufacturing step, a metal sheet is press-formed under the press forming conditions of the press forming analysis at a time when it is determined that no fracture occurred in the press condition adjusting step and the press formed part is manufactured.

A press forming analysis device according to the first aspect of the present invention performs a press forming analysis for a press formed part and includes: a blank model creating unit configured to create a blank model; and a press forming analysis unit configured to perform the press forming analysis using the created blank model, wherein the blank model creating unit includes: a blank mesh creating unit configured to create a finite element mesh constituting the blank model; a grouping unit configured to group finite elements constituting the finite element mesh into a plurality of groups; and a deformation condition setting unit configured to differently set a mechanical property, an element size, or an element type for each of the groups as a condition concerning deformation for the finite elements of each of the grouped groups.

A press forming analysis device according to the second aspect of the present invention performs press forming analysis for a press formed part and includes: a blank model creating unit configured to create a blank model; and a press forming analysis unit configured to perform the press forming analysis using the created blank model, wherein the blank model creating unit includes: a region setting unit configured to set a plurality of regions on an inner side of a contour line representing a shape of a blank; and a mesh creating unit configured to create a finite element mesh different in an element size, which is a condition relating to deformation, for each of the set plurality of regions.

A press forming analysis program according to the present invention causes a computer to function as the press forming analysis device according to the first or the second aspect of the present invention.

### Advantageous Effects of Invention

According to the present invention, in press forming using a metal sheet, it is possible to perform an appropriate press forming analysis considering nonuniformity of deformation in a metal material. It is possible to improve determination accuracy of press forming fracture at the time of the press forming. Further, it is possible to suppress a defect of a press formed part by determining press forming fracture based on a result of the press forming analysis for the present invention and performing press forming under press forming conditions to which a fracture countermeasure is applied

### Brief Description of Drawings

FIG. 1 is a flowchart illustrating a flow of processing of a press forming analysis method according to a first embodiment.
FIG. 2 is a flowchart illustrating a flow of processing of another aspect of the press forming analysis method according to the first embodiment.
FIG. 3 is a flowchart illustrating a flow of processing of a press forming analysis method according to a second embodiment.
FIG. 4 is a flowchart illustrating a flow of processing of a press forming analysis method according to a third embodiment.
FIG. 5 is a block diagram illustrating a configuration of a press forming analysis device according to a fourth embodiment.
FIG. 6 is a block diagram illustrating a configuration of another aspect of the press forming analysis device according to the fourth embodiment.
FIG. 7 is an explanatory diagram of a component shape to be analyzed in an example 1.
FIG. 8 is an explanatory diagram of a blank mesh in Example 1.
FIG. 9 is an explanatory diagram of a state after press forming of an actual component having the same shape as the component to be analyzed in the example 1.
FIG. 10 is an explanatory diagram of an analysis result of the example 1.
FIG. 11 is a flowchart illustrating a flow of processing of a press forming analysis method according to another aspect of the first embodiment.
FIG. 12 is a flowchart illustrating a flow of processing of a press forming fracture determining method according to another aspect of the second embodiment.
FIG. 13 is a flowchart illustrating a flow of processing of a press formed part manufacturing method according to another aspect of the third embodiment.
FIG. 14 is an explanatory diagram of a press forming die used in an example 2.
FIG. 15 is an explanatory diagram of an analysis result of the example 2
FIG. 16 is an explanatory diagram of a state after press forming of an actual component having the same shape as the component to be analyzed in the example 2. Description of Embodiments

### [First Embodiment]

Prior to explanation of embodiments, a background leading to the invention is explained. The inventors have studied deformation of a metal material in causing a finite element analysis to reproduce nonuniformity of deformation in the metal material.

The metal material is formed by gathering of a plurality of crystal grains having aligned slip deformation directions of crystals as a unit different deformation directions. It is considered that a difference in a deformation direction for each of the crystal grains and a difference in the size of the crystal grain exhibit nonuniformity of deformation in the metal material. Because of the nonuniformity of deformation in the metal material, a part having a large strain and a part having a small strain are microscopically mixed and distributed in the metal material. Since a metal material having high ductility has a large amount of deformation until fracture, strain distribution caused by the nonuniformity of deformation in the metal material is small with respect to strain of the entire metal material and does not greatly affect fracture of a press formed part. However, in a high-tensile steel sheet having low ductility, strain distribution caused by nonuniformity of deformation in a metal material reaches non-negligible magnitude with respect to strain of the entire metal material, and sometimes affects fracture of a press formed part. While the size of crystal grains of a metal material is approximately several tens of microns, a mesh size of a finite element generally used for a press forming analysis is as large as approximately several millimeters. It is difficult to reproduce conditions relating to deformation of a single crystal grain in the press forming analysis for the related art.

Therefore, focusing on the fact that conditions relating to deformation of an actual metal material are determined by the shape, the size, and distribution of the crystal grains, in a press forming analysis by the finite element method, finite element meshes are respectively grasped as aggregates of crystal grains of approximately several millimeters, and the conditions relating to the deformation are treated for each of the finite element meshes. Then, concerning the conditions relating to the deformation, in the related art, all of the finite element meshes have been treated as having uniform properties. However, by performing a press forming analysis in which nonuniform properties are imparted to each of the finite element meshes, an idea has been obtained that nonuniformity of the deformation of the finite element meshes can be caused and fracture of a press formed part due to the nonuniformity of the deformation in the metal material can be reproduced. Then, the present inventors have obtained a finding that, in performing the press forming analysis, finite element meshes constituting a blank only have be grouped to differently set conditions relating to deformation for each of groups. The present invention is based on such a finding and is specifically explained in the following embodiments.

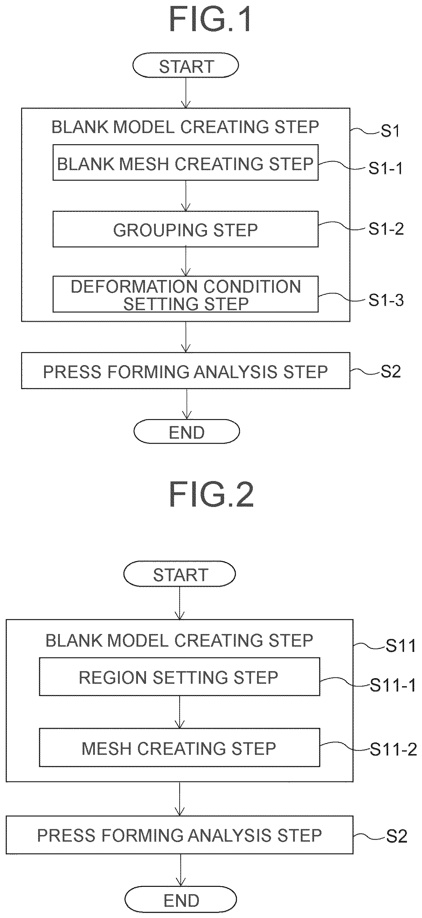

A press forming analysis method according to the present embodiment is a press forming analysis method by a finite element method in which a computer executes steps, the press forming analysis method including, as illustrated in FIG. 1, a blank model creating step (S1) of creating a blank model and a press forming analysis step (S2) of performing a press forming analysis using the created blank model. The steps are explained in detail below.

### < Blank model creating Step >

The blank model creating step (S1) is a step of creating a blank model in which a metal sheet to be a blank is modeled by a finite element. The metal sheet may be a hot rolled steel sheet, a cold rolled steel sheet, or a galvanized steel sheet obtained by applying surface treatment (electro-galvanizing, hot-dip galvanizing, organic finishing, or the like) to a steel sheet or a sheet made of various kinds of metal such as SUS, aluminum, and magnesium.

The blank model creating step (S1) includes a blank mesh creating step (S1-1), a grouping step (S1-2), and a deformation condition setting step (S1-3).

### < < Blank Mesh Creating Step > >

The blank mesh creating step (S1-1) is a step of creating a finite element mesh constituting the blank model.

### < < Grouping step > >

The grouping step (S1-2) is a step of grouping finite elements constituting the finite element mesh into a plurality of groups. For example, when there are 1000 finite elements, the 1000 finite elements are divided into, for example, three groups of A, B, and C. Which finite element belongs to which group only has to be optionally determined. The finite element mesh constituting the blank is divided into a plurality of groups in order to differently set conditions concerning deformation for each of the groups in order to reproduce nonuniformity of deformation in a metal material. The number of groups only has to be set to at least two or more.

### < < Deformation condition setting step > >

In the deformation condition setting step (S1-3), the conditions concerning the deformation is differently set for each of the groups in the finite elements of the grouped groups. Examples of the conditions concerning the deformation include a mechanical property, a sheet thickness, an element size, and an element type.

The mechanical property is yield strength, tensile strength, a strain hardening exponent (n-value), a plastic strain ratio (r-value), a friction coefficient, a stress-strain relation, and the like and are characteristics relating to deformation such as easiness of deformation in press forming. The sheet thickness is also a condition relating to deformation. When the sheet thickness is large, a sheet is less easily deformed and, when the sheet thickness is small, the sheet is easily deformed. In a press forming analysis using the finite element method, since stress and strain calculated by a difference in an element size and an element type are different, the element size and the element type are also conditions relating to deformation. Examples of the element type include a triangle, a quadrangle, a complete integral-type serving as an integral method, and a selective reduced integral-type.

When the mechanical property is differently set, a range of the mechanical properties to be set is preferably set within a range of dispersion of the mechanical properties of respective metal structures of a metal material applied as a blank. For example, in the case of dual-phase steel mainly containing ferrite and martensite, a tensile strength of ferrite is set within a range of 210 to 300 MPa (MPa-grade) and a tensile strength of martensite is set within a range of 1200 to 1800 MPa in respective meshes.

The range of the mechanical property to be set is preferably set within a range of dispersion of mechanical properties of the metal material applied as the blank. For example, in the case of a 1180 MPa-grade high-tensile steel sheet, a tensile strength is set within a range of 1180 to 1300 MPa in respective meshes.

As explained above, when the mechanical property is differently set, an analysis result matching a metal material to be actually used can be obtained by setting the mechanical property within a range of a property of the actual metal material.

When the sheet thickness is differently set, a range of the sheet thickness is preferably set within a range of ±20% of the sheet thickness of the metal material applied as the blank. For example, when the metal material is a cold rolled steel sheet, the tolerance (Tables 15 and 16) of the thickness indicated by JIS G 3141 (a cold rolled steel sheet and a steel strip) is ±20% at the maximum. The sheet thickness only has to be differently set within this range.

When the element size is differently set, a range of an element size to be set is preferably set to a half or more of the sheet thickness of the metal sheet applied as the blank. In the definition of a shell element, it is required that an element size is requested to be sufficiently large with respect to a sheet thickness. However, since up to approximately a half of the sheet thickness is used in an actual analysis, the element size only has to be differently set within this range.

### < Press forming analysis step >

The press forming analysis step (S2) is a step of performing a press forming analysis using a created blank model. In the press forming analysis, a deformation state at the time when the blank model is formed into a target shape by a mold model is analyzed to obtain analysis results of stress, strain, a sheet thickness, and the like in a forming process and the forming bottom dead center. The analysis results by the created blank model reproduce nonuniformity of deformation of a metal sheet. Analysis results close to results of an actual press forming are obtained. In this regard, as indicated by examples explained below, when fracture determination based on a press forming analysis result using the blank model of the present invention is performed, a result close to an actual press formed part is obtained. This supports the fact that the press forming analysis results reproduce the results close to the actual press forming.

According to the present embodiment, it is possible to perform an appropriate press forming analysis considering the nonuniformity of deformation in the metal material in the press forming analysis using the finite element method. Accordingly, it is possible to improve the determination accuracy of the press forming fracture at the time of the press forming. Therefore, it is possible to suppress a defect of a press formed part by determining press forming fracture based on a result of the press forming analysis for the present invention and performing press forming under press forming conditions to which a fracture countermeasure is applied.

In the above explanation, the finite element meshes constituting the blank are grouped and the conditions relating to deformation are differently set for each of the groups. However, when a condition relating to deformation is an element size, as illustrated in FIG. 2, a blank model creating step (S11) may be configured by the following steps. That is, an aspect may be adopted that includes a region setting step (S11-1) of setting a plurality of regions on the inner side a contour line representing the shape of the blank and a mesh creating step (S11-2) of creating, for each of the plurality of set regions, a finite element mesh, an element size, which is a condition relating to deformation, of which is different.

### < Another aspect of the first embodiment >

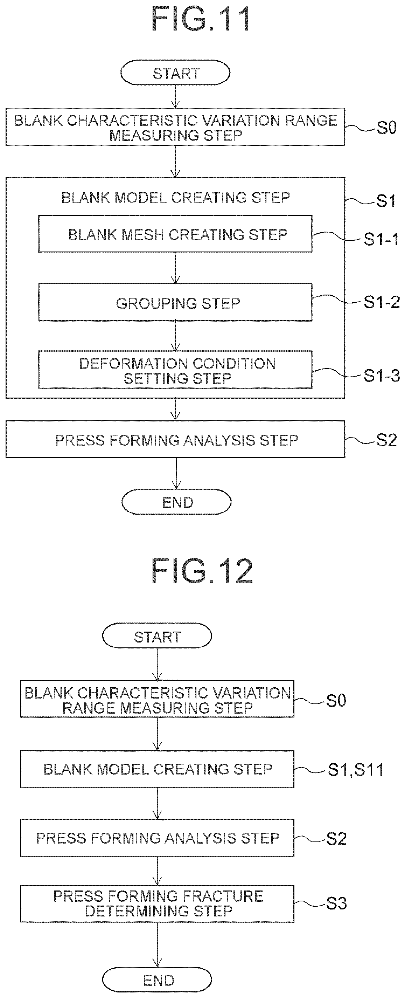

As illustrated in FIG. 11, a press forming analysis method according to another aspect of the first embodiment includes, before the blank model creating step (S1) of the press forming analysis method according to the first embodiment, a blank characteristic variation range measuring step (S0) of measuring a variation range of mechanical property of a metal sheet applied as a blank or a range of a sheet thickness.

When the mechanical property is differently set in the deformation condition setting step (S1-3) in the blank model creating step S1 of the press forming analysis method in the first embodiment, a hardness distribution of the metal sheet applied as the blank is measured in the blank characteristic variation range measuring step (S0) and a range of dispersion of the mechanical property to be set is determined based on the measured hardness distribution.

For example, a hardness (Vickers hardness (HV)) distribution of the metal sheet applied as the blank is measured. The Vickers hardness HV is known to be equivalent to approximately one third of tensile strength (for example, JIS Handbook (1) Steel I, edited by Japanese Standards Association, SAE-J-417 Hardness Conversion Table). Even when a tensile test piece (for example, JIS Z 2201) cannot be collected from the metal sheet applied as the blank, the distance between the centers of indentations only has to be set to three times or more a diagonal distance (20 µm or more) of the indentations (for example, ISO6507). The range of dispersion of tensile strength can be acquired based on the Vickers hardness HV distribution of the metal sheet.

When the sheet thickness is differently set in the deformation condition setting step (S1-3) in the blank model creating step S1 of the press forming analysis method in the first embodiment, the surface roughness of the front and rear surfaces of the metal material to be applied as the blank may be measured in the blank characteristic variation range measuring step (S0) and a range of the sheet thickness to be set may be determined based on the measured surface roughness. For example, arithmetic average roughness Ra defined in JIS B0601 and arithmetic average height Sa defined in ISO25178 can be adopted as the range of the sheet thickness of the metal material to be applied as the blank.

When the hardness distribution of the metal sheet applied as the blank is measured, the range of dispersion of the mechanical property is determined based on the measured hardness distribution, and the different tensile strength is set for each of the elements belonging to the groups, the surface roughness of the front and rear surfaces of the metal sheet applied as the blank may be further measured, the range of the sheet thickness may be determined based on the surface roughness of the metal sheet, and the sheet thickness of the finite element meshes constituting the blank model may be set at random in the range of the sheet thickness regardless of the group.

With the press forming analysis method according to the other aspect of the first embodiment, the variation range of the mechanical property (tensile strength) or the range of the sheet thickness of the metal sheet applied as the blank to be formed into press formed part is determined based on the hardness distribution of the metal sheet applied as the blank to be actually formed into the press formed part and the measurement result of the surface roughness of the front and rear surfaces of the metal sheet. Accordingly, it is possible to further improve the reproduction accuracy of a fracture of the press formed part due to the nonuniformity of the deformation in the metal material applied as the blank to be formed into the press formed part.

### [Second Embodiment]

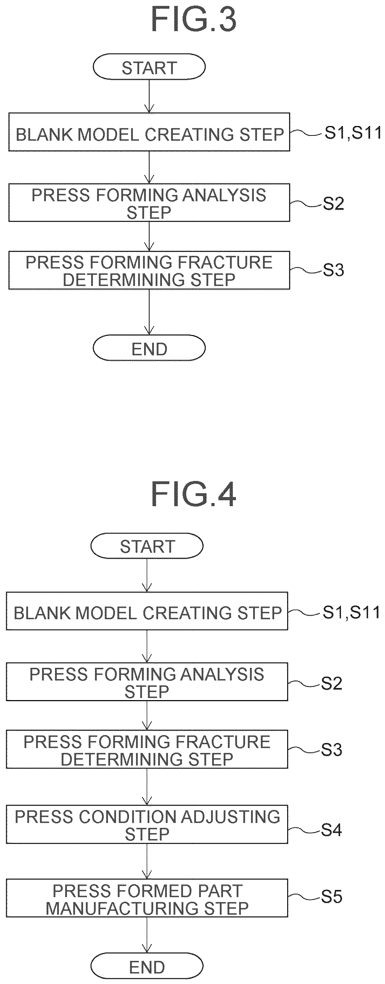

By carrying out the press forming analysis method in the first embodiment and using the result of the press forming analysis method, it is possible to determine the presence or absence of occurrence of fracture in press forming of a press formed part. Specifically, as illustrated in FIG. 3, the press forming analysis method includes a blank model creating step (S1 and S11), a press forming analysis step (S2), and a press forming fracture determining step (S3). The blank model creating step (S1 and S11) and the press forming analysis step (S2) are as explained in the first embodiment. In the press forming fracture determining step (S3), the presence or absence of fracture occurrence in the press forming of the press formed part is determined based on a forming limit diagram (FLD) of a metal sheet used for the press formed part.

In many commercial CAE (Computer Aided Engineering) solvers as well, a function of determining the presence or absence of fracture occurrence with the FLD using a result obtained by a press forming simulation is implemented. Accordingly, by using such a function, it is possible to easily determine the presence or absence of occurrence of fracture in the press forming.

### < Another aspect of the second embodiment >

Another aspect of the second embodiment relates to a press forming fracture determining method of carrying out the press forming analysis method according to the other aspect of the first embodiment and determining the presence or absence of occurrence of fracture in press forming of a press formed part by using a result of the press forming analysis method. As illustrated in FIG. 12, the press forming fracture determining method according to the other aspect of the second embodiment includes a blank characteristic variation range measuring step (S0), a blank model creating step (S1 and S11), a press forming analysis step (S2), and a press forming fracture determining step (S3). The blank characteristic variation range measuring step (S0), the blank model creating step (S1, S11), and the press forming analysis step (S2) are as explained in the first embodiment.

According to the present embodiment, the variation range of the mechanical property (tensile strength) or the range of the sheet thickness of the metal sheet applied as the blank to be formed into the press formed part is determined based on the hardness distribution of the metal sheet applied as the blank to be actually formed into the press formed part and the measurement result of the surface roughness of the front and rear surfaces of the metal sheet. Therefore, the accuracy of the determination of the fracture of the press formed part can be further improved.

### [Third Embodiment]

A third embodiment relates to a press formed part manufacturing method using the press forming fracture determining method in the second embodiment. As illustrated in FIG. 4, the press formed part manufacturing method in the third embodiment includes a blank model creating step (S1 and S11), a press forming analysis step (S2), a press forming fracture determining step (S3), a press condition adjusting step (S4), and a press formed part manufacturing step (S5).

The blank model creating step (S1 and S11) and the press forming analysis step (S2) are as explained in the first embodiment. In the press forming fracture determining step (S3), the presence or absence of occurrence of fracture in the press forming of the press formed part is determined by the press forming fracture determining method in the second embodiment. In the press condition adjusting step (S4), when it is determined in the fracture determining step that fracture has occurred, press forming conditions including a blank shape and a press forming die shape in a press forming analysis are changed until it is determined that no fracture has occurred in all parts of the press formed part.

When a press formed part is drawn using a press forming die including a die, a punch, and a blank holder, press forming conditions such as a blank holder pressure, a radius of a die shoulder part, a radius of a punch shoulder part, and lubricating of a blank in contact with a die surface and a blank holder surface are changed. By changing a blank holder pressure, tension acting on the blank during the press forming can be optimized to eliminate the occurrence of fracture.

In a shoulder part of a die or a shoulder part of a punch, the blank is subjected to bending deformation and unbending deformation while receiving tension. A thickness reduction is rapidly promoted and easily leads to fracture. For this reason, by changing the shape of the press forming die to increase the radius of the die shoulder part and the radius of the punch shoulder part, it is possible to eliminate fracture at the shoulder part of the die or the shoulder part of the punch, promote a metal flow via the shoulder part of the die or the shoulder part of the punch, and eliminate fracture that occurs near the shoulder part of the die or the shoulder part of the punch. By lubricating the blank in contact with the die surface and the blank holder surface, a drawability limit is improved and the occurrence of fracture can be eliminated.

In the press formed part manufacturing step (S5), a metal sheet is press-formed under a press forming condition of a press forming analysis at the time when it is determined in the press condition adjusting step (S4) that no fracture has occurred and a press formed part is manufactured. When the blank holder pressure is changed as the press forming condition of the press forming analysis, a set value of an air pressure in a control panel of a pneumatic die cushion (an auxiliary pressure device) of a press forming machine is changed and the metal sheet is press-formed to manufacture a press formed part.

When the shape of the press forming die is changed as the press forming condition of the press forming analysis, shape data of the press forming die (a model) used for the press forming analysis is input to a CAD/CAM program linked with a numerically-controlled machine (a Numerically-Controlled machine) and is converted into NC data (numerical control data) (NC program) (numerical control program)) for NC machining. The numerically-controlled machine machines a casting mold model made of expanded polystyrene or a metal mold made of steel material with a full mold casting method (an evaporative pattern casting method). Then, using the numerical control data (the numerical control program), the casting mold model made of expanded polystyrene or the metal mold made of steel material is manufactured by the numerically-controlled machine. Then, the metal sheet is press-formed using the press forming die, the shape of which has been changed, to manufacture a press formed part. When the lubricating of the blank in contact with the die surface and the blank holder surface is changed as the press forming condition of the press forming analysis, a type of lubricating oil is changed (a viscosity coefficient is increased or an extreme pressure additive is added), a polymer film such as a polyethylene film is inserted, and the metal sheet is press-formed to manufacture a press formed part.

According to the present embodiment, it is possible to manufacture a press formed part in which press forming fracture is suppressed.

### < Another aspect of the third embodiment >

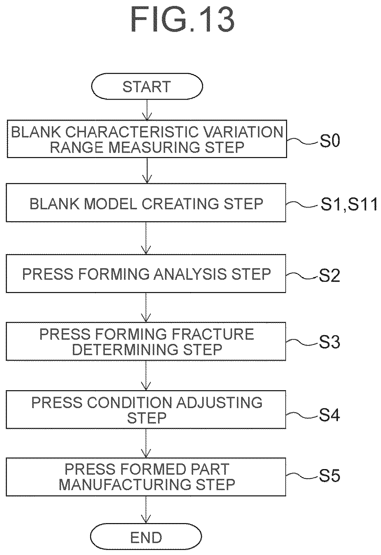

As illustrated in FIG. 13, a press formed part manufacturing method according to another aspect of the third embodiment may include a blank characteristic variation range measuring step (S0). The blank characteristic variation range measuring step (S0) is as explained in the first embodiment.

According to the other aspect of the third embodiment, the variation range of the mechanical property (tensile strength) or the range of the sheet thickness of the metal sheet applied as the blank to be formed into the press formed part is determined based on the hardness distribution of the metal sheet applied as the blank to be actually formed into the press formed part and the measurement result of the surface roughness of the front and rear surfaces of the metal sheet, and the accuracy of the determination of the fracture of the press formed part can be further improved. Accordingly, it is possible to manufacture a press formed part in which press forming fracture is further suppressed.

### [Fourth Embodiment]

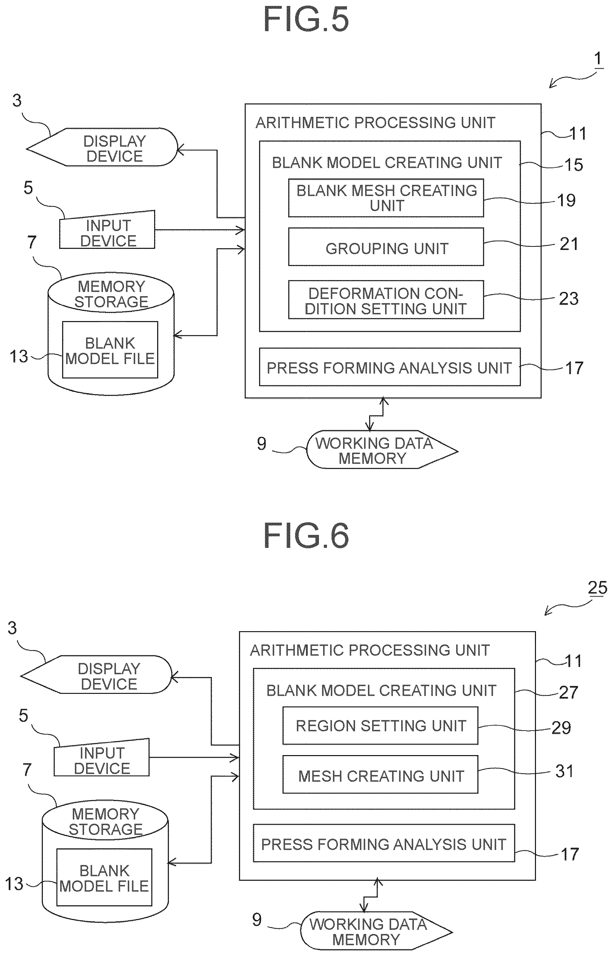

The present embodiment relates to a press forming analysis device that executes the press forming analysis method in the first embodiment. FIG. 5 illustrates an example of a configuration of a press forming analysis device 1 according to the present embodiment. The press forming analysis device 1 is configured by a PC (personal computer) or the like and includes, as illustrated in FIG. 5, a display device 3, an input device 5, a memory storage 7, a working data memory 9, and an arithmetic processing unit 11. The display device 3, the input device 5, the memory storage 7, and the working data memory 9 are connected to the arithmetic processing unit 11 and functions thereof are executed according to a command from the arithmetic processing unit 11. In the following explanation, the functions of the components of the press forming analysis device 1 according to the present embodiment are explained.

### << Display device >>

The display device 3 is used for displaying a blank model, an analysis target model, an analysis result, and the like and is configured by a liquid crystal monitor (LCD monitor) or the like.

### << Input device >>

The input device 5 is used for, for example, reading a blank model file 13 (FIG. 5) and inputting an instruction by an operator such as displaying a blank model and an analysis target model and is configured by a keyboard, a mouse, or the like.

### << memory storage >>

The memory storage 7 is used for, for example, storing various files such as the blank model file 13 and analysis results and is configured by a hard disk or the like.

### << Working data memory >>

The working data memory 9 is used for temporary storage and calculation of data to be used by the arithmetic processing unit 11 and is configured by a RAM (Random Access Memory) or the like.

### << Arithmetic processing unit >>

The arithmetic processing unit 11 includes, as illustrated in FIG. 5, a blank model creating unit 15 and a press forming analysis unit 17. The blank model creating unit 15 includes a blank mesh creating unit 19, a grouping unit 21, and a deformation condition setting unit 23. The units of the arithmetic processing unit 11 functions when a CPU (central processing unit) of a PC (personal computer) executes a predetermined program. In the following explanation, functions of the units of the arithmetic processing unit 11 are explained.

### < Blank mesh creating unit >

The blank mesh creating unit 19 has a function of creating a finite element mesh constituting a blank model.

### < Grouping unit >

The grouping unit 21 has a function of grouping finite elements constituting the finite element mesh into a plurality of groups.

### < Deformation condition setting unit >

The deformation condition setting unit 23 has a function of differently setting, for the finite elements of each group grouped, a mechanical property, an element size, or an element type for each of the groups as a condition concerning deformation.

With the press forming analysis device 1 of the present embodiment, as explained in the first embodiment, it is possible to perform an appropriate press forming analysis considering nonuniformity of deformation in a metal material in a press forming analysis using the finite element method. Accordingly, it is possible to improve the determination accuracy of the press forming fracture at the time of the press forming.

When the condition concerning deformation is the element size, as in a press forming analysis device 25 illustrated in FIG. 6, a blank model creating unit 27 may be configured by a region setting unit 29 and a mesh creating unit 31. The region setting unit 29 has a function of setting a plurality of regions on the inner side of a contour line representing the shape of a blank. The mesh creating unit 31 has a function of creating a finite element mesh different in an element size, which is a condition relating to deformation, for each of the plurality of set regions.

### [Fifth Embodiment]

A press forming analysis program according to the present embodiment causes a computer to function as the press forming analysis devices 1 and 25 explained in the fourth embodiment. Specifically, the press forming analysis program is executed by a CPU to cause the blank model creating unit 15 (the blank mesh creating unit 19, the grouping unit 21, and the deformation condition setting unit 23) and the press forming analysis unit 17 to function. As another aspect, the press forming analysis program is executed by the CPU to cause the blank model creating unit 27(the region setting unit 29 and the mesh creating unit 31) to function.

### [Example 1]

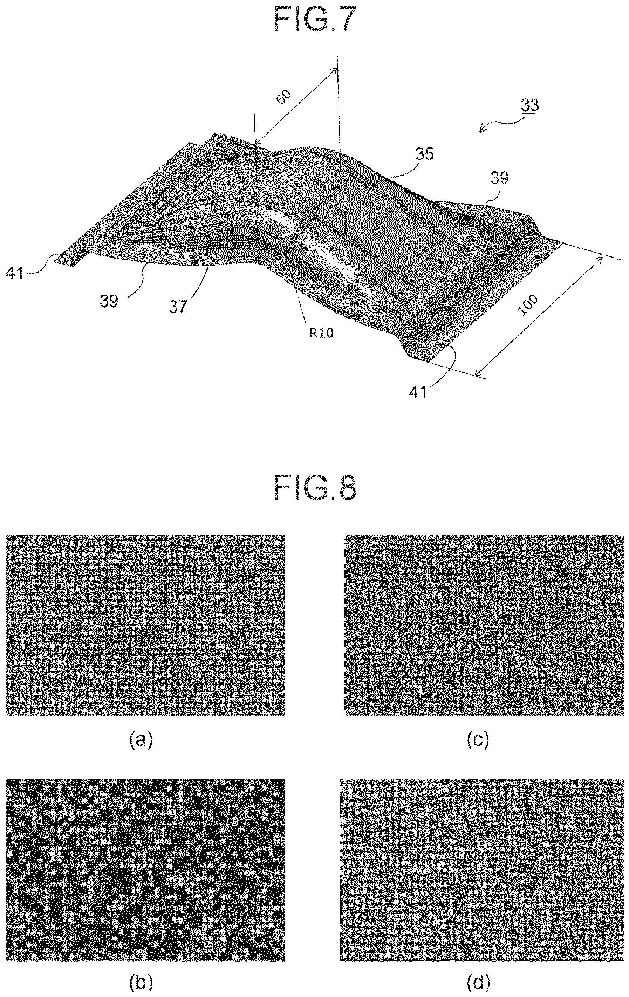

A simulation for effect confirmation of the present invention was performed. Therefore, the simulation is explained below. FIG. 7 illustrates a component 33 set as a target of the present example. As illustrated in FIG. 7, the component 33 includes a top portion 35, both sides of the top portion 35, a side wall portion 37, and a flange portion 39 at the lower end of the side wall portion 37. The top portion 35 has a shape curved convex upward. Both the end portions are bent downward and have an end flange portion 41 at a lower end thereof. The width of the end flange portion 41 is 100 mm, the width between both side wall portions of a component central portion is 60 mm, and R (radius) of a ridge line section connecting the top portion 35 and the side wall portion 37 at the component central portion is 10 mm (R10). The material of the component 33 is a cold-rolled 1180 MPa-grade high-tensile steel sheet having a sheet thickness of 1.40 mm.

A blank mesh used in the press forming analysis for the related art is illustrated in FIG. 8(a), a blank mesh according to the present invention is illustrated in FIG. 8(b), FIG. 8(c), and FIG. 8(d), and specifications illustrated in the figures are illustrated in Table 1.

**Table 1**

| | Blank mesh | Element size (mm) | Element type | Sheet thickness (mm) | Yield strength (MPa) | Tensile strength (MPa) |
|---|---|---|---|---|---|---|
| Related art | FIG. 8(a) | 1.20 | Quadrangular complete integration shell | 1.40 | 886 | 1234 |
| Invention example | FIG. 8(b) Case 1 | 1.20 | Quadrangular complete integration shell | 1.35 | 886 | 1234 |
| | | | | 1.40 | | |
| | | | | 1.45 | | |
| | FIG. 8(b) Case 2 | 1.20 | Quadrangular complete integration shell | 1.40 | 886 | 1221 |
| | | | | | | 1234 |
| | | | | | | 1246 |
| | FIG. 8(c) | 0.7 to 1.80 | Quadrangular complete integration shell | 1.40 | 886 | 1234 |
| | FIG. 8(d) | 1.20 | Quadrangular complete integration shell | 1.40 | 886 | 1234 |
| | | | Triangular complete integration shell | | | |

In the blank mesh illustrated in FIG. 8(a), all elements were the same, an element size was 1.20 mm, an element type was a quadrangular complete integration shell element, a sheet thickness was 1.40 mm, yield strength was 886 MPa, and tensile strength was 1234 MPa.

In the blank mesh illustrated in FIG. 8(b), elements constituting the blank mesh were divided into three groups, different sheet thicknesses or tensile strengths were set for each of the elements belonging to the groups, and the other setting conditions were the same. Specifically, in a case 1, the element size was set to 1.20 mm, the element type was set to the quadrangular complete integration shell element, the sheet thickness was set to three types of 1.35 mm, 1.40 mm, and 1.45 mm for each of the groups, the yield strength was set to 886 MPa, and the tensile strength was set to 1234 MPa. In a case 2, the element size was set to 1.20 mm, the element type was set to the quadrangular complete integration shell element, the sheet thickness was set to 1.40 mm, the yield stress was set to 886 MPa, the tensile strength was set to, for each of the groups, three types of 1234 MPa that was a reference, 1221 MPa that was -1% with respect to the reference, and 1246 MPa that was +1% with respect to the reference.

In the blank mesh illustrated in FIG. 8(c), the size of one side of the square element was optionally changed between 0.70 mm and 1.80 mm, and the element type was set to the quadrangular complete integration shell element, the sheet thickness was set to 1.40 mm, the yield strength was set to 886 MPa, and the tensile strength was set to 1234 MPa. In the example, after elements were created with a uniform size of 1.20 mm in length and width, coordinates of nodes constituting the elements in a range (a group) in which the element size was changed were optionally moved in ranges of +0.30 mm and -0.25 mm in length and width in a plane to change the element size.

In the blank mesh illustrated in FIG. 8(d), elements constituting the blank mesh were divided into two groups, the element type was differentiated for each of the elements belonging to the groups, and the other setting conditions were set the same. Specifically, the element size was set to 1.20 mm, the element type was set to two types of the quadrangular complete integration shell element and a triangular complete integration shell element, the sheet thickness was set to 1.40 mm, the yield strength was set to 886 MPa, and the tensile strength was set to 1234 MPa.

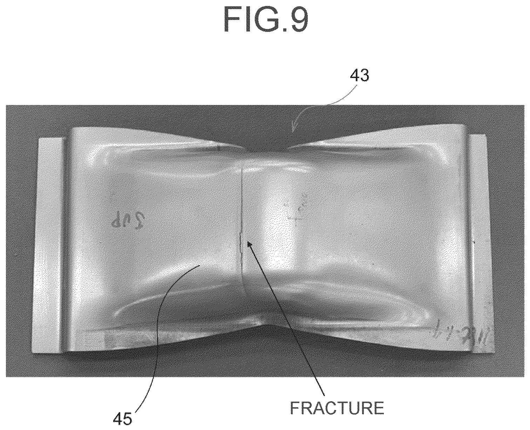

FIG. 9 illustrates an actual press formed part 43 manufactured by actually press forming a press formed part having the same shape as the press formed part illustrated in FIG. 7. As illustrated in FIG. 9, in the actual press formed part 43, fracture occurred in the width direction of the top portion 45 near the center in the longitudinal direction of the component 33 in the top portion 45.

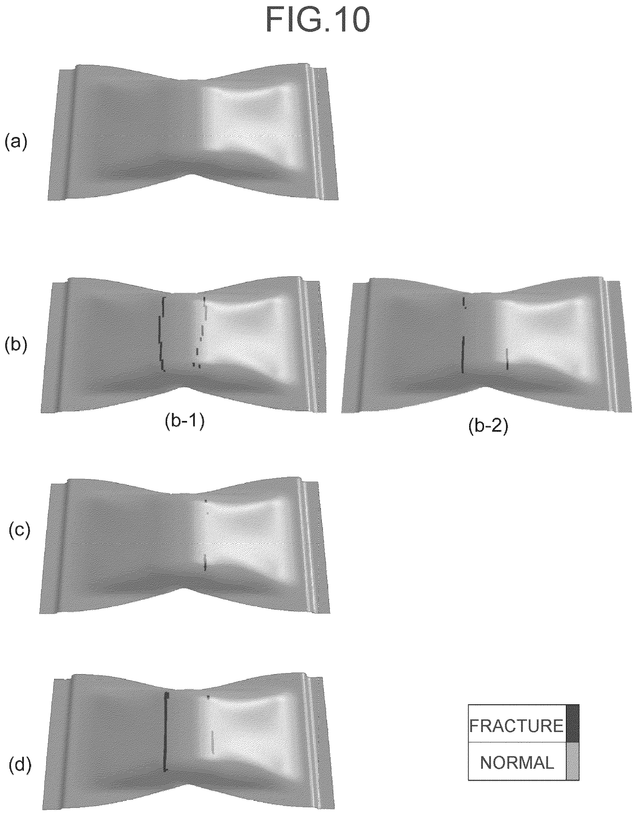

FIG. 10(a) illustrates a press forming analysis result in the related art using a blank including a blank mesh illustrated in FIG. 8(a). FIG. 10(b-1) illustrates an analysis result of a case 1 in blank including a blank mesh illustrated in FIG. 8(b). FIG. 10(b-2) illustrates an analysis result of a case 2 in the blank including the blank mesh illustrated in FIG. 8(b). FIG. 10(c) illustrates an analysis result in a blank including a blank mesh illustrated in FIG. 8(c). FIG. 10(d) illustrates an analysis result in a blank including a blank mesh illustrated in FIG. 8(d). The analysis results illustrated in FIG. 10 are obtained by performing fracture determination using FLD based on a result of a press forming analysis and displaying a fracture occurrence portion in black in the figure.

In FIG. 10(a) illustrating the result of the related art, a black line indicating fracture occurrence does not appear. However, in FIGS. 10(b) to (d) illustrating the results of the examples of the invention, a black line appears near the center of the top portion in all the cases. As explained above, although fracture occurrence cannot be determined in the related art, fracture occurrence can be determined in the examples of the present invention. A result close to the actual press formed part 43 illustrated in FIG. 9 was successfully obtained.

### [Example 2]

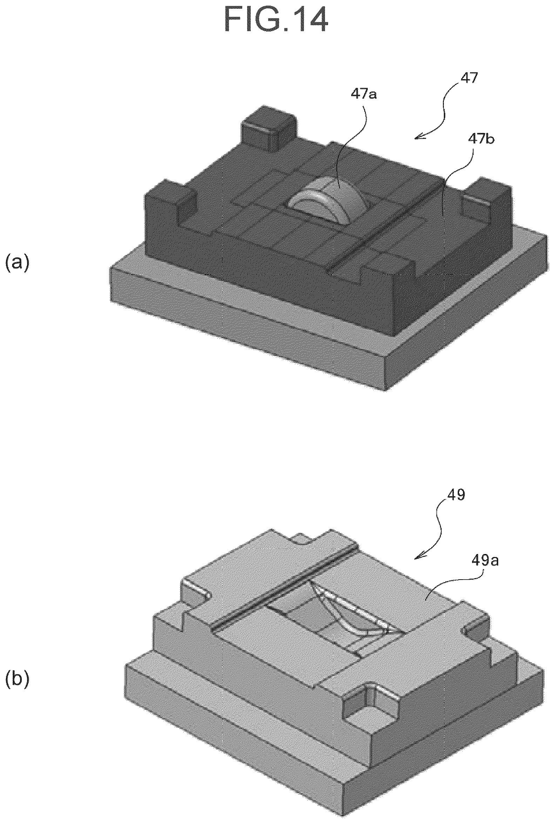

The component 33 having the same shape as that in the example 1 illustrated in FIG. 7 was set as a target, a metal sheet having a sheet thickness of 1.4 mm, yield strength of 1055 MPa, and tensile strength of 1470 MPa was set as a blank, and the press formed part (the component 33) according to the third embodiment was manufactured using a press forming die illustrated in FIG. 14 (a lower mold 47 in FIG. 14(a) and an upper mold 49 in FIG. 14(b)). The lower mold is configured from a punch 47a and a blank holder 47b (a blank holder) and the upper mold 49 is configured from a die 49a.

The element size of the blank mesh used in the press forming analysis was set to 1.20 mm, the element type was set to the quadrangular complete integration shell element, the elements constituting the blank mesh were divided into three groups as illustrated in FIG. 8(b), and different tensile strength was set for each of the elements belonging to the groups.

A range of tensile strength set for each of the elements belonging to the groups was set based on a range of dispersion in a mechanical property determined from a measured hardness distribution by measuring a Vickers hardness HV distribution of a metal sheet applied as a blank. For the Vickers hardness HV, a sheet width direction total length of the metal sheet was measured at intervals of 1 mm, an indenter specified in JIS B 7725 was used, a test force was set to 200 g, and a test force retention time was set to 10 seconds. Based on dispersion (1σ=3.8%) of the Vickers hardness HV with respect to an average value, the tensile strength was set to, for each of the groups, three types of a reference 1234 MPa, 1141 MPa that was -7.6% (-2σ) with respect to the reference, and 1327 MPa that was +7.6% (=2σ) with respect to the reference.

The surface roughness of the front and rear surfaces of the metal material applied as the blank was measured and a range of the blank sheet thickness was determined based on the arithmetic average height Sa defined in ISO25178. Based on a measured average (Ave) of Sa of 0.022 mm and a standard deviation (σ) of 0.0018 mm, a range of the sheet thickness (a total of the front and rear surfaces) was set to 1.40 mm±0.0025 (=Ave+2σ) mm, and the sheet thickness of a finite element mesh constituting the blank was set at random regardless of the groups.

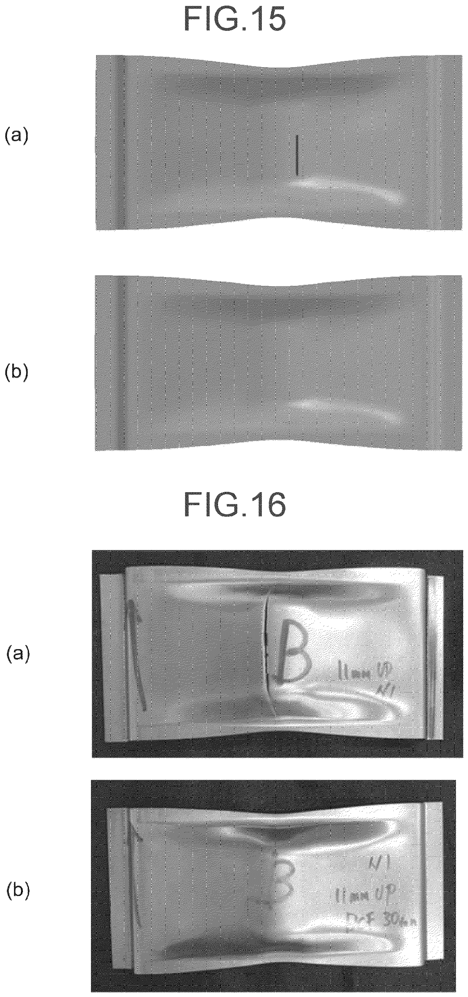

Then, the press forming analysis was carried out with the blank holder pressure (a force generated at a contact portion of the blank holder and the die) set to 40 ton as the press forming condition. FIG. 15(a) illustrates an analysis result. The analysis result illustrated in FIG. 15(a) is obtained by performing fracture determination using an FLD based on a result of the press forming analysis and displaying a fracture occurrence part with a black line in the figure. FIG. 16(a) illustrates an actual press formed part manufactured by actually press-forming a metal sheet under the press forming conditions explained above using the press forming die illustrated in FIG. 14. As illustrated in FIG. 16(a), in the actual press formed part, fracture occurred in the top portion width direction near the center in the component longitudinal direction in the top portion.

Subsequently, the press forming analysis was carried out with the blank holder pressure set to 30 ton as the press forming condition. FIG. 15(b) illustrates an analysis result. In the analysis result illustrated in FIG. 15(b), it was determined that the fracture occurrence part in the top portion was eliminated and no fracture occurred in all parts of the press formed part.

Subsequently, the set value on the control panel of the air pressure of the pneumatic die cushion (the auxiliary pressure device) of the press forming machine was changed such that the blank holder pressure was 30 ton as the press forming condition of the press forming analysis in which it was determined that no fracture occurred and the metal sheet was actually press-formed using the press forming die illustrated in FIG. 14 to manufacture a press formed part. FIG. 16(b) illustrates an actual press formed part. As illustrated in FIG. 16(b), in the actual press formed part, as in the analysis result illustrated in FIG. 15(b), fracture in the top portion width direction near the center in the component longitudinal direction in the top portion was successfully suppressed.

As explained above, it was demonstrated that the analysis result can be an analysis result close to the actual press formed part 43 by performing the press forming analysis using the blank model to which the present invention is applied. That is, according to the present invention, it is possible to improve the determination accuracy for press forming fracture at the time of the press forming. Therefore, it is possible to suppress a defect of a press formed part by determining press forming fracture based on a result of the press forming analysis for the present invention and performing press forming under press forming conditions to which a fracture countermeasure is applied.

### Industrial Applicability

According to the present invention, it is possible to provide a press forming analysis method that can consider nonuniformity of deformation in a metal material with a finite element method in press forming using a metal sheet and accurately predict fracture of a press formed part. According to the present invention, it is possible to provide a press forming fracture determining method that can accurately determine fracture of a press formed part and a press formed part manufacturing method using the press forming fracture determining method. Further, according to the present invention, it is possible to provide a press forming analysis device and a press forming analysis program that can accurately perform a press forming analysis with a finite element method.

### Reference Signs List

- 1: PRESS FORMING ANALYSIS DEVICE
- 3: DISPLAY DEVICE
- 5: INPUT DEVICE
- 7: MEMORY STORAGE
- 9: WORKING DATA MEMORY
- 11: ARITHMETIC PROCESSING UNIT
- 13: BLANK MODEL FILE
- 15: BLANK MODEL CREATING UNIT
- 17: PRESS FORMING ANALYSIS UNIT
- 19: BLANK MESH CREATING UNIT
- 21: GROUPING UNIT
- 23: DEFORMATION CONDITION SETTING UNIT
- 25: PRESS FORMING ANALYSIS DEVICE (ANOTHER ASPECT)
- 27: BLANK MODEL CREATING UNIT (ANOTHER ASPECT)
- 29: REGION SETTING UNIT
- 31: MESH CREATING UNIT
- 33: COMPONENT
- 35: TOP PORTION
- 37: SIDE WALL PORTION
- 39: FLANGE PORTION
- 41: END FLANGE PORTION
- 43: ACTUAL PRESS FORMED PART
- 45: TOP PORTION
- 47: LOWER MOLD
- 47a: PUNCH
- 47b: BLANK HOLDER
- 49: UPPER MOLD
- 49a: DIE

## Claims

1. A press forming analysis method using a finite element method in which a computer executes steps, the press forming analysis method comprising:
a blank model creating step of creating a blank model; and
a press forming analysis step of performing a press forming analysis using the created blank model, wherein
the blank model creating step includes:
a blank mesh creating step of creating a finite element mesh constituting a blank model;
a grouping step of grouping finite elements constituting the finite element mesh into a plurality of groups; and
a deformation condition setting step of differently setting a condition relating to deformation for each of the groups in the finite elements of the grouped groups.

2. The press forming analysis method according to claim 1, wherein, in the deformation condition setting step, a mechanical property or a sheet thickness is differently set for each of the groups.

3. The press forming analysis method according to claim 1, wherein, in the deformation condition setting step, an element size is differently set for each of the groups.

4. The press forming analysis method according to claim 1, wherein, in the deformation condition setting step, an element type is differently set for each of the groups.

5. The press forming analysis method according to claim 2, wherein, when the mechanical property is differently set, a range of the mechanical property to be set is set within a range of dispersion of a mechanical property of each of metal structures of a metal material applied as a blank.

6. The press forming analysis method according to claim 2, wherein, when the mechanical property is differently set, a range of the mechanical property to be set is set within a range of dispersion in a mechanical property of a metal material applied as a blank.

7. The press forming analysis method according to claim 6, further comprising a blank characteristic variation range measuring step of measuring a variation range of the mechanical property of the metal sheet applied as the blank, wherein
in the blank characteristic variation range measuring step, a hardness distribution of the metal sheet applied as the blank is measured and a range of dispersion of the mechanical property is determined based on the hardness distribution.

8. The press forming analysis method according to claim 7, wherein the blank characteristic variation range measuring step further includes:
measuring surface roughness of front and rear surfaces of the metal sheet applied as the blank;
determining a range of a sheet thickness based on the surface roughness of the metal sheet; and
setting a sheet thickness of a finite element mesh constituting the blank model at random in the range of the sheet thickness.

9. The press forming analysis method according to claim 2, wherein, when the sheet thickness is differently set, a range of the sheet thickness is set within ±20% of a sheet thickness of a metal material applied as a blank to set the sheet thickness.

10. The press forming analysis method according to claim 9, further comprising a blank characteristic variation range measuring step of measuring a range of the sheet thickness of the metal sheet applied as the blank, wherein
in the blank characteristic variation range measuring step, surface roughness of front and rear surfaces of the metal sheet applied as the blank is measured, and the range of the sheet thickness is determined based on the surface roughness of the metal sheet.

11. A press forming analysis method using a finite element method in which a computer executes steps, the press forming analysis method comprising:
a blank model creating step of creating a blank model; and
a press forming analysis step of performing a press forming analysis using the created blank model, wherein
the blank model creating step includes:
a region setting step of setting a plurality of regions on an inner side of a contour line representing a shape of a blank; and
a mesh creating step of creating a finite element mesh different in an element size, which is a condition relating to deformation, for each of the set plurality of regions.

12. The press forming analysis method according to claim 3 or 11, wherein a range of an element size to be set is a half or more of a sheet thickness of a metal sheet applied as a blank.

13. A press forming fracture determining method for a press formed part, the press forming fracture determining method comprising:
a press forming fracture determining step of performing a press forming analysis for a press formed part using the press forming analysis method according to any one of claims 1 to 12; and
further determining presence or absence of occurrence of fracture in press forming of the press formed part based on a forming limit diagram (FLD) of a metal sheet used for the press formed part.

14. A press formed part manufacturing method for suppressing press forming fracture, the press formed part manufacturing method comprising:
a press forming fracture determining step;
a press condition adjusting step; and
a press formed part manufacturing step, wherein
in the press forming fracture determining step, presence or absence of occurrence of fracture in press forming of a press formed part is determined by the press forming fracture determining method for a press formed part according to claim 13,
in the press condition adjusting step, when it is determined in the press forming fracture determining step that fracture occurred, press forming conditions including a blank shape and a press forming die shape in a press forming analysis are changed until it is determined that no fracture occurred in all parts of the press formed part, and
in the press formed part manufacturing step, a metal sheet is press-formed under the press forming conditions of the press forming analysis at a time when it is determined that no fracture occurred in the press condition adjusting step and the press formed part is manufactured.

15. A press forming analysis device for performing a press forming analysis for a press formed part, the press forming analysis device comprising:
a blank model creating unit configured to create a blank model; and
a press forming analysis unit configured to perform the press forming analysis using the created blank model, wherein
the blank model creating unit includes:
a blank mesh creating unit configured to create a finite element mesh constituting the blank model;
a grouping unit configured to group finite elements constituting the finite element mesh into a plurality of groups; and
a deformation condition setting unit configured to differently set a mechanical property, an element size, or an element type for each of the groups as a condition concerning deformation for the finite elements of each of the grouped groups.

16. A press forming analysis device for performing press forming analysis for a press formed part, the press forming analysis device comprising:
a blank model creating unit configured to create a blank model; and
a press forming analysis unit configured to perform the press forming analysis using the created blank model, wherein
the blank model creating unit includes:
a region setting unit configured to set a plurality of regions on an inner side of a contour line representing a shape of a blank; and
a mesh creating unit configured to create a finite element mesh different in an element size, which is a condition relating to deformation, for each of the set plurality of regions.

17. A press forming analysis program for causing a computer to function as the press forming analysis device according to claim 15 or 16.
